# EUROPEAN PATENT SPECIFICATION

(11) **EP 3 797 064 B1**
(45) Date of publication and mention of the grant of the patent: **03.04.2024**
(21) Application number: 19807234.0
(22) Date of filing: 15.05.2019
(51) Int. Cl.: B62B 7/12, B62B 7/00, B62K 27/12, B62B 5/00, B62J 7/04

(54) **A CHILD CARRIER AND DOCKING ASSEMBLY**
TRAGEVORRICHTUNG FÜR KINDER UND ANDOCKVORRICHTUNG
PORTE-ENFANT ET ENSEMBLE D'AMARRAGE

(30) Priority: 21.05.2018 SE 1850593; 06.07.2018 SE 1850854
(43) Date of publication of application: 31.03.2021
(73) Proprietor: PåHoj AB, 211 20 Malmö (SE)
(72) Inventor: VON SCHANTZ, Lycke, 212 20 Malmö (SE)
(74) Representative: AWA Sweden AB
(86) International application number: PCT/SE2019/050436
(87) International publication number: WO 2019/226094

(56) References cited:
- WO-A1-2016/003359
- DE-U1- 9 405 574
- DE-U1-202014 009 530
- GB-A- 2 336 815
- GB-A- 2 538 053
- JP-A- 2004 268 670
- JP-A- 2004 268 670
- JP-A- 2005 219 547
- JP-A- 2005 219 547
- US-A- 4 440 331
- US-A1- 2008 073 396

## Description

### Field of the invention

The present invention relates to a child carrier and docking assembly in the form of a hybrid child seat and stroller possible to connect to a docking unit of the assembly, e.g. suitable for a bike.

### Technical background

Systems comprising a combined child carrier and docking assembly adapted to be removably mounted to a bicycle has been disclosed before. In WO 2016/003359 there is disclosed a child carrier assembly adapted to be removably mounted to a bicycle, said carrier assembly comprising a seat, a backrest portion, a footrest portion, two side portions, means for seating a child and means for supporting a child while seated, a docking assembly for connecting said child carrier assembly to said bicycle, where said child carrier assembly is adapted to function as a convertible stroller by means of comprising a wheel assembly and a handle bar, where said docking assembly comprises one part being fixed to said bicycle and one part being fixed to said child carrier assembly, where said connection parts being releaseably mountable to one another, wherein said docking assembly comprises a spring loaded mechanism and wherein said spring loaded mechanism controls said releasable docking assembly by means of comprising one movable part and one fixed part, where the docking assembly has a locking function so that an upper docking assembly unit fixed to said carrier assembly is dockable and undockable to a lower docking assembly unit fixed to said bicycle, and wherein the upper docking assembly unit comprises two separate unlocking handles.

Documents DE 94 05 574 U1 and US 2008/0073396 A1 also disclose carriers for removably mounting to the rear of a bicycle or motorcycle.

One purpose of the present invention is to provide an improved child carrier and docking assembly which is very effective to lock and release from e.g. a bike, and thus is connected to the bike in a safe way.

This problem is solved by the invention as defined in claim 1. Preferred embodiments are defined in the dependent claims.

### Summary of the invention

The above purpose is provided by a child carrier and docking assembly adapted to be removably mounted to a bicycle, moped, electric bike or the like, said assembly comprising a child carrier unit which is in the form of a hybrid child seat and stroller possible to connect to a docking unit of the assembly, said docking unit comprising two units, one first unit being an adapter arranged to be fixated to the bicycle, moped, electric bike or the like, and one second unit arranged to be fixated to or integrated into the child carrier unit, wherein the second unit 2 is lockable into and releasable from the first unit 1 so that the child carrier unit is locked to and released from the bicycle, respectively, wherein the first unit 1 comprises a handle 3 which is arranged to be pulled out when the child carrier unit is intended to be released from the bicycle, moped, electric bike or the like, said handle 3 having two end positions, one first end position where the handle 3 is in a locked state and where an interconnecting unit 6 of the first unit 1 is in connection to, fixating and locking the second unit 2, and one second end position in an open state where the handle 3 is in a fully extended position and where the interconnecting unit 6 is released from the second unit 2.

The present invention provides a solution where the stroller is securely locked to e.g. a bicycle when they are connected to each other, i.e. when the second unit is connected to the first unit. Moreover, the stroller is also simple to lock to and unlock (release) from the bicycle.

To give further reference to prior art it may be mentioned that in JP2004268670A there is disclosed a docking assembly adapted to be removably mounted to a bicycle. The focus in this document is on locking of a basket. It is mentioned that a chair for small children is one possible alternative, however this is not the same thing as a stroller. The present invention differs from JP2004268670A both in terms of the connecting (locking and releasing) arrangement and also that the present invention is directed to a child carrier unit in the form of a hybrid child seat and stroller, which is not the case in JP2004268670A.

In this regard it may be said the expression "hybrid child seat and stroller" according to the present invention implies a unit which may function both as a child seat when being connected to a bicycle or such as well as a child stroller when it is released from the bicycle.

### Specific embodiments of the present invention.

Below specific embodiments of the present invention are disclosed.

According to one embodiment of the present invention, the interconnecting unit is spring-loaded.

According to yet another embodiment, the handle is spring-loaded so that the handle is self-locking when the handle is not pulled out by force.

Furthermore, when the handle is in a locked state then the interconnecting unit is extended downwards and passes a portion of the second unit to fixate the second unit and lock the hybrid child seat and stroller and second unit to the first unit.

Moreover, according to yet another embodiment, the interconnecting unit is extended downwards and acts as a plug into the second unit to fixate the second unit and lock the hybrid child seat and stroller and second unit to the first unit when the handle is in a locked state.

Furthermore, according to one specific embodiment, when the handle is pulled out then the interconnecting unit is pushed upwards to be released from the portion of the second unit to release the second unit from the first unit.

The second unit arranged to be fixated to or integrated into the child carrier unit is arranged to be pulled onto and grip around the first unit being an adapter arranged to be fixated to the bicycle, moped, electric bike or the like when fixating the second unit to the first unit.

Moreover, the child carrier and hence second unit is suitably arranged to be lifted outwards horizontally to be released completely from the first unit when the handle is in a fully extended position and hence open state.

Furthermore, according to yet another specific embodiment of the present invention, the interconnecting unit is angled.

Moreover, as mentioned above an open/locked indicator is suitably connected to the first unit.

According to yet another embodiment of the present invention, a handle security lock is arranged to enable security locking and unlocking of the handle. The handle security lock may be a bar arranged to be pushed, pulled or moved to unlock the handle.

Furthermore, it may also be mentioned that in the case of a stroller being the child carrier unit, then this stroller may suitably be collapsible / foldable. Moreover, the stroller may be in many different shapes and designs. Examples are a stroller with only single wheels in four positions, but also double wheels may be provided in the rear of the stroller. The present invention, however, is not limited to any such stroller designs.

Furthermore, it should be noted that the present invention is directed to a child carrier unit which suitably is in the form of seat and stroller. A child carrier unit may be directed to basket or loading applications, i.e. as a storage unit or loading unit, where a first unit and a second unit are arranged and connected such as described according to the present invention as defined in the claims.

### Description of the drawings

In figs. 1-10 specific embodiments of the present invention are shown. In these examples the hybrid child seat and stroller is adapted for a regular type of a bike, however also other applications are totally possible according to the present invention, such as a moped or electric bike.
In fig. 1 there is shown one embodiment according to the present invention. In this case there is shown the handle 3 (trigger) totally pulled out so that the handle 3 is in an open state. The lock button / interconnecting unit 6 in this situation is pulled inwards, so the system is disengaged, and where the interconnecting unit 6 is released from the second unit 2. Therefore, a hybrid child seat and stroller (see figs. 6 and 7) can be pulled off from the docking unit being the first unit 1. Moreover, there is also shown an open/locked indicator 8 which is connected to the first unit 1.

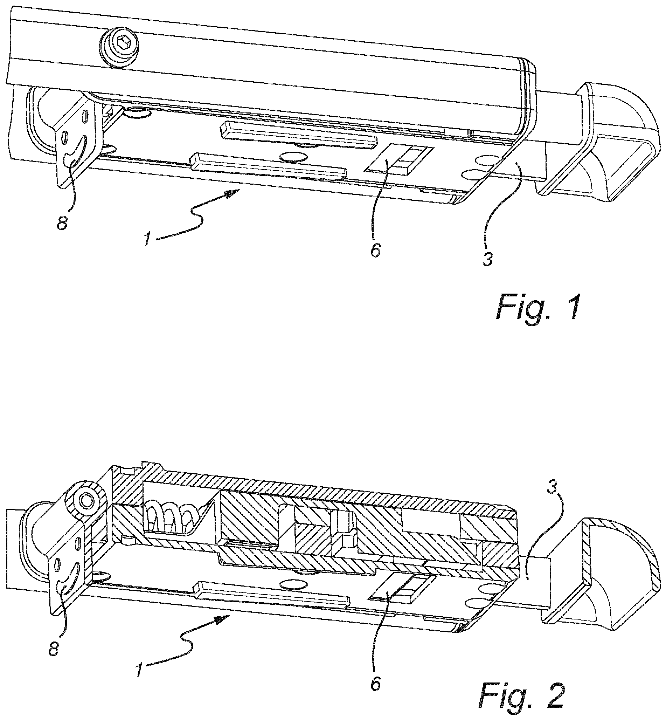

In fig. 2 there is shown the same situation as in fig. 1, however in a section. The guiding surface of the trigger / handle 3 on the lock is shown now.

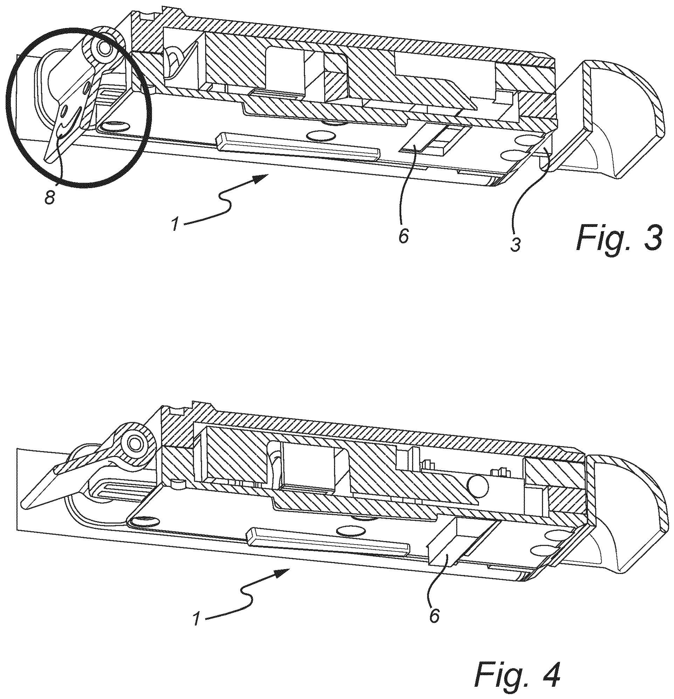

In fig. 3 there is shown a sequence when a locking of the unit is about to be made. When the pulling trigger /handle 3 is released, the springs will make the trigger / handle 3 move inside the box. The end of the trigger / handle 3 will now start pushing the smiley flag / open/locked indicator 8. (circled area)
In fig. 4 a further part of a sequence is shown. When the pulling trigger / handle 3 is totally inside the box, the lock of the interconnecting unit 6 is totally pushed out of the box. The end of the trigger / handle 6 is now pushing up the smiley flag / open/locked indicator 8. Therefore, only if the trigger / handle 3 is inside the box, the locking hook can be out and lock the system.

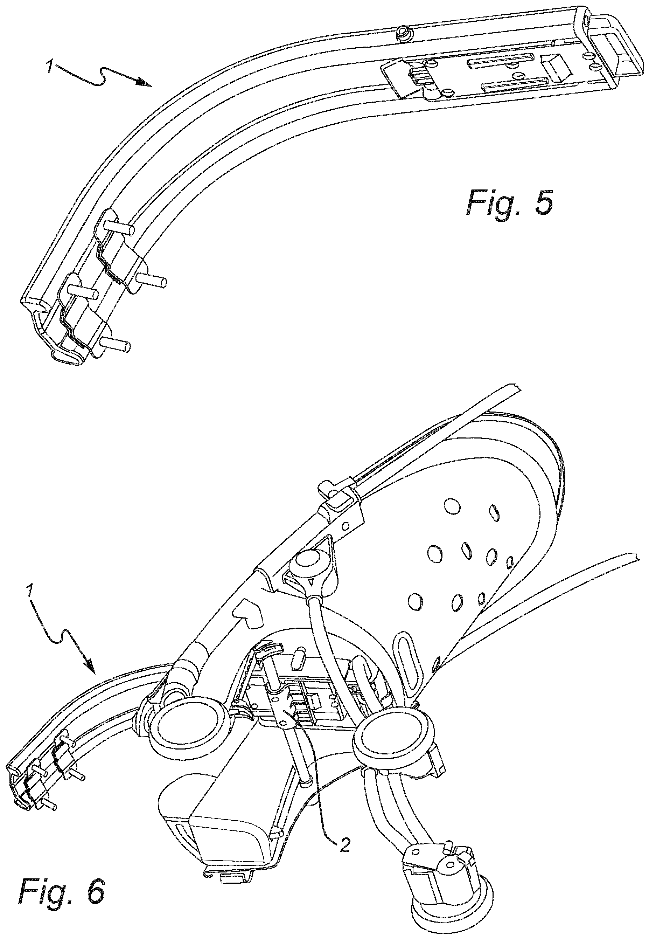

In fig. 5 there is shown one embodiment of a first unit 1 according to the present invention.
In fig. 6 there is shown how a second unit 2 and thus the hybrid child seat and stroller is fixated and locked to a first unit 1 according to one embodiment of the present invention.

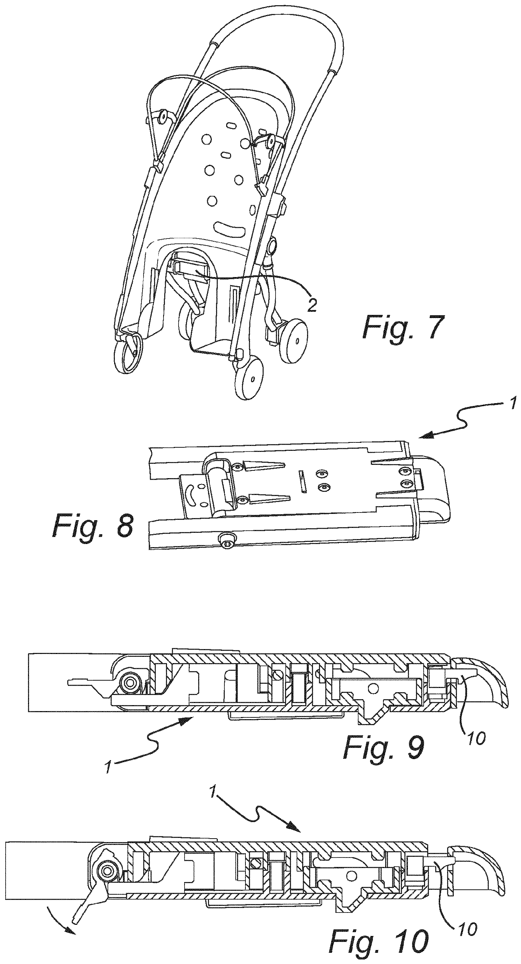

In fig. 7 there is shown hybrid child seat and stroller with a connected second unit 2 when the hybrid child seat and stroller is standing on the ground.
In figs. 8-10 there is a first unit 1 according to one embodiment of the present invention. In this case a handle security lock 10 is arranged to enable security locking and unlocking of the handle 3. The security lock 10 is a bar arranged to be pushed, pulled or moved to unlock the handle 3. This type of security lock 10 may be provided to increase the safety for locking and unlocking and may be needed according to certain requirements, e.g. EN 14344.

## Claims

1. A child carrier and docking assembly adapted to be removably mounted to a bicycle, moped, electric bike or the like, said assembly comprising a child carrier unit which is in the form of a hybrid child seat and stroller adapted to connect to a docking unit of the assembly, said docking unit comprising two units, one first unit (1) being an adapter adapted to be fixated to the bicycle, moped, electric bike or the like, and one second unit (2) arranged to be fixated to or integrated into the child carrier unit,
wherein the second unit (2) is arranged to be pulled onto and grip around the first unit (1) so that the child carrier unit can be locked to and released from the
bicycle,
respectively,
wherein the first unit (1) comprises a handle (3) which is arranged to be pulled out when the child carrier unit is intended to be released from the bicycle, moped, electric bike or the like, said handle (3) having two end positions, one first end position where the handle (3) is in a locked state and where an interconnecting unit (6) of the first unit (1) is in connection to, fixating and locking the second unit (2), and one second end position in an open state where the handle (3) is in a fully extended position and where the interconnecting unit (6) is released from the second unit (2),
wherein when the handle (3) is in a locked state then the interconnecting unit (6) is extended downwards and passes a portion of the second unit (2) to fixate the second unit (2) and lock the hybrid child seat and stroller and second unit (2) to the first unit (1).

2. A child carrier and docking assembly according to claim 1, wherein the interconnecting unit (6) is spring-loaded.

3. A child carrier and docking assembly according to claim 1 or 2, wherein the handle (3) is spring-loaded so that the handle (3) is self-locking when the handle is not pulled out by force.

4. A child carrier and docking assembly according to claim 1, wherein the interconnecting unit (6) is extended downwards and acts as a plug into the second unit (2) to fixate the second unit (2) and lock the hybrid child seat and stroller and second unit (2) to the first unit (1) when the handle (3) is in a locked state.

5. A child carrier and docking assembly according to claim 4, wherein when the handle (3) is pulled out then the interconnecting unit (6) is pushed upwards to be release from the portion of the second unit (2) to release the second unit (2) from the first unit (1).

6. A child carrier and docking assembly according to any of claims 1-5, wherein the child carrier and hence second unit (2) is arranged to be lifted outwards horizontally to be released completely from the first unit (1) when the handle (3) is in a fully extended position and hence open state.

7. A child carrier and docking assembly according to any of claims 1-6, wherein the interconnecting unit (6) is angled.

8. A child carrier and docking assembly according to any of claims 1-7, wherein an open/locked indicator (8) is connected to the first unit (1).

9. A child carrier and docking assembly according to any of claims 1-8, wherein a handle security lock (10) is arranged to enable security locking and unlocking of the handle (3).

10. A child carrier and docking assembly according to claim 9, wherein the handle security lock (10) is a bar arranged to be pushed, pulled or moved to unlock the handle (3).

## Patentansprüche

1. Kindertrage- und Andockanordnung, die dazu eingerichtet ist, abnehmbar an einem Fahrrad, Moped, Elektrofahrrad oder dergleichen angebracht zu werden, wobei die Anordnung eine Kindertrageeinheit in Form eines Hybrid-Kindersitzes und Kinderwagens umfasst, die dazu eingerichtet ist, mit einer Andockeinheit der Anordnung verbunden zu werden, wobei die Andockeinheit zwei Einheiten umfasst, wobei eine erste Einheit (1) ein Adapter ist, der dazu eingerichtet ist, an dem Fahrrad, Moped, E-Bike oder dergleichen befestigt zu werden, und eine zweite Einheit (2) dazu eingerichtet ist, an der Kindertrageeinheit befestigt oder darin eingegliedert zu werden,
wobei die zweite Einheit (2) dazu eingerichtet ist, auf die erste Einheit (1) gezogen zu werden und diese zu umgreifen, sodass die Kindertrageeinheit am Fahrrad verriegelt und davon gelöst werden kann, beziehungsweise
wobei die erste Einheit (1) einen Griff (3) umfasst, der so angeordnet ist, dass er herausgezogen werden kann, wenn die Kindertrageeinheit vom Fahrrad, Moped, E-Bike oder dergleichen gelöst werden soll, wobei der Griff (3) zwei Endpositionen aufweist, eine erste Endposition, in der sich der Griff (3) in einem verriegelten Zustand befindet und in der eine Verbindungseinheit (6) der ersten Einheit (1) mit der zweiten Einheit (2) in Verbindung steht, diese fixiert und verriegelt, und eine zweite Endposition in einem geöffneten Zustand, in der sich der Griff (3) in einer vollständig ausgefahrenen Position befindet und in der die Verbindungseinheit (6) von der zweiten Einheit (2) gelöst ist,
wobei, wenn sich der Griff (3) in einem verriegelten Zustand befindet, die Verbindungseinheit (6) nach unten verlängert wird und an einem Abschnitt der zweiten Einheit (2) vorbeigeführt wird, um die zweite Einheit (2) zu fixieren und den Hybrid-Kindersitz und Kinderwagen und die zweite Einheit (2) an der ersten Einheit (1) zu verriegeln.

2. Kindertrage- und Andockanordnung gemäß Anspruch 1, wobei die Verbindungseinheit (6) durch Federkraft vorgespannt ist.

3. Kindertrage- und Andockanordnung gemäß Anspruch 1 oder 2, wobei der Griff (3) durch Federkraft vorgespannt ist, sodass der Griff (3) selbstsichernd ist, wenn der Griff nicht mit Gewalt herausgezogen wird.

4. Kindertrage- und Andockanordnung gemäß Anspruch 1, wobei die Verbindungseinheit (6) nach unten verlängert wird und als Stecker in die zweite Einheit (2) fungiert, um die zweite Einheit (2) zu fixieren und den Hybrid-Kindersitz und Kinderwagen und die zweite Einheit (2) an der ersten Einheit (1) zu verriegeln, wenn der Griff (3) in einem verriegelten Zustand ist.

5. Kindertrage- und Andockanordnung gemäß Anspruch 4, wobei, wenn der Griff (3) herausgezogen wird, die Verbindungseinheit (6) nach oben geschoben wird, um von dem Abschnitt der zweiten Einheit (2) gelöst zu werden, um die zweite Einheit (2) von der ersten Einheit (1) zu lösen.

6. Kindertrage- und Andockanordnung gemäß einem der Ansprüche 1 bis 5, wobei die Kindertrage- und somit zweite Einheit (2) so angeordnet ist, dass sie horizontal nach außen angehoben werden kann, um vollständig von der ersten Einheit (1) gelöst zu werden, wenn sich der Griff (3) in einer vollständig ausgezogenen Position und somit im geöffneten Zustand befindet.

7. Kindertrage- und Andockanordnung gemäß einem der Ansprüche 1-6, wobei die Verbindungseinheit (6) abgewinkelt ist.

8. Kindertrage- und Andockanordnung gemäß einem der Ansprüche 1-7, wobei eine Offen/Verriegelt-Anzeige (8) mit der ersten Einheit (1) verbunden ist.

9. Kindertrage- und Andockanordnung gemäß einem der Ansprüche 1-8, wobei ein Griffsicherheitsschloss (10) dazu vorgesehen ist, ein sicheres Ver- und Entriegeln des Griffs (3) zu ermöglichen.

10. Kindertransport- und Andockanordnung gemäß Anspruch 9, wobei die Griffsicherheitssperre (10) eine Stange ist, die zum Drücken, Ziehen oder Bewegen eingerichtet ist, um den Griff (3) zu entriegeln.

## Revendications

1. Ensemble porte-enfant et d'assemblage adapté pour être monté de façon amovible sur une bicyclette, un cyclomoteur, un vélo électrique ou analogue, ledit ensemble comprenant une unité porte-enfant qui est sous la forme d'un siège-et-poussette hybride pour enfant adapté pour se raccorder à une unité d'assemblage de l'ensemble, ladite unité d'assemblage comprenant deux unités, une première unité (1) qui est un adaptateur adapté pour être fixé à la bicyclette, au cyclomoteur, au vélo électrique ou analogue, et une seconde unité (2) qui est agencée pour être fixée à, ou intégrée dans, l'unité porte-enfant,
dans lequel la seconde unité (2) est agencée pour être tirée sur et entrer en prise autour de la première unité (1) pour que l'unité porte-enfant puisse être verrouillée sur et enlevée de la bicyclette, respectivement,
dans lequel la première unité (1) comprend une poignée (3) qui est agencée pour être retirée lorsqu'il est prévu que l'unité porte-enfant soit enlevée de la bicyclette, du cyclomoteur, du vélo électrique ou analogue, ladite poignée (3) ayant deux positions d'extrémité, une première position d'extrémité où la poignée (3) est dans un état verrouillé et où une unité de raccordement mutuel (6) de la première unité (1) est en raccordement avec, en train de fixer et de verrouiller, la seconde unité (2), et une seconde position d'extrémité dans un état ouvert où la poignée (3) est dans une position entièrement étendue et où l'unité de raccordement mutuel (6) est enlevée de la seconde unité (2),
dans lequel, lorsque la poignée (3) est dans un état verrouillé, alors l'unité de raccordement mutuel (6) est étendue vers le bas et franchit une partie de la seconde unité (2) pour fixer la seconde unité (2) et verrouiller le siège-et-poussette hybride pour enfant et la seconde unité (2) sur la première unité (1).

2. Ensemble porte-enfant et d'assemblage selon la revendication 1, dans lequel l'unité de raccordement mutuel (6) est à ressort.

3. Ensemble porte-enfant et d'assemblage selon la revendication 1 ou 2, dans lequel la poignée (3) est à ressort pour que la poignée (3) soit auto-verrouillable lorsque la poignée n'est pas retirée par force.

4. Ensemble porte-enfant et d'assemblage selon la revendication 1, dans lequel l'unité de raccordement mutuel (6) est étendue vers le bas et sert d'obstruction dans la seconde unité (2) pour fixer la seconde unité (2) et verrouiller le siège-et-poussette hybride pour enfant et la seconde unité (2) sur la première unité (1) lorsque la poignée (3) est dans un état verrouillé.

5. Ensemble porte-enfant et d'assemblage selon la revendication 4, dans lequel, lorsque la poignée (3) est retirée, alors l'unité de raccordement mutuel (6) est poussée vers le haut pour être enlevée de la partie de la seconde unité (2) pour enlever la seconde unité (2) de la première unité (1).

6. Ensemble porte-enfant et d'assemblage selon l'une quelconque des revendications 1 à 5, dans lequel le porte-enfant, et donc la seconde unité (2), est agencé pour être levé vers l'extérieur horizontalement pour être enlevé complètement de la première unité (1) lorsque la poignée (3) est dans une position entièrement étendue et dont l'état ouvert.

7. Ensemble porte-enfant et d'assemblage selon l'une quelconque des revendications 1 à 6, dans lequel l'unité de raccordement mutuel (6) est inclinée.

8. Ensemble porte-enfant et d'assemblage selon l'une quelconque des revendications 1 à 7, dans lequel un indicateur d'état ouvert/verrouillé (8) est raccordé à la première unité (1).

9. Ensemble porte-enfant et d'assemblage selon l'une quelconque des revendications 1 à 8, dans lequel un verrou de sécurité de poignée (10) est agencé pour permettre le verrouillage et le déverrouillage de sécurité de la poignée (3).

10. Ensemble porte-enfant et d'assemblage selon la revendication 9, dans lequel le verrou de sécurité de poignée (10) est une barre agencée pour être poussée, tirée, ou déplacée, pour déverrouiller la poignée (3).
